# EUROPEAN PATENT SPECIFICATION

(11) **EP 2 148 267 B1**
(45) Date of publication and mention of the grant of the patent: **15.07.2015**
(21) Application number: 09163945.0
(22) Date of filing: 26.06.2009
(51) Int. Cl.: G06F 3/0488

(54) **Mobile device having touch screen and method for setting virtual keypad thereof**
Mobile Vorrichtung mit Berührungsbildschirm und Verfahren zum Einstellen einer virtuellen Tastatur dafür
Dispositif mobile avec écran tactile et son procédé de configurer un clavier virtuel

(30) Priority: 25.07.2008 KR 20080072840
(43) Date of publication of application: 27.01.2010
(73) Proprietor: Samsung Electronics Co., Ltd., Suwon-si, Gyeonggi-do, 443-742 (KR)
(72) Inventor: Hwang, Yong Duk, Gyeonggi-do (KR); Yun, Sung Hm, Gyeonggi-do (KR)
(74) Representative: Gover, Richard Paul

(56) References cited:
- WO-A2-2004/006080
- US-A1- 2002 124 026
- US-A1- 2005 237 310
- US-A1- 2006 077 179
- US-B1- 6 456 952

## Description

### BACKGROUND OF THE INVENTION

### 1. Field of the Invention:

The present invention relates to a mobile device with a touch screen. More particularly, the present invention relates to a method for setting a virtual keypad displayed on a touch screen of a mobile device.

### 2. Description of the Related Art:

A touch screen is a unit that can be used as both a display unit and an input unit. Therefore, electronic devices having a touch screen may not require additional display and input units. Because of this advantage, a touch screen has been widely used for size-limited electronic devices, such as mobile devices which are often referred to as portable devices or handheld devices.

Typically, a touch screen displays a virtual keypad or a graphical icon for selecting a menu. By touching a keypad or an icon on a touch screen, a user can write a text message, input a phone number, or use any other various functions of a mobile device. Such a keypad or an icon may, however, have a fixed size while displayed on a touch screen.

Therefore, when touching a keypad or an icon, some users who are not-experienced in using a touch screen or have large fingers may often mistakenly touch outer regions beyond the keypad or the icon.

By mistakenly touching the outer regions, the user may feel reluctant in using the mobile device. Also, a user with large fingers may be annoyed at having to prepare a stylus pen to use a touch screen.

Therefore, a need exits for a mobile device and method for setting a keypad size on a touch screen of the mobile device.

US-2006/077179-A1 discloses a keyboard with automatic adjusting key intervals which can adjust the key interval values and the key frame edge values of a keyboard according to the detected contour scope of a user's hands. The adjusted keyboard is displayed on a touch screen so that the user can perform keyboard operation more smoothly on the keyboard that matches the size of his/her hands.

US-2005/237310-A1 discloses a device comprising a touch screen which reacts to a touch by a touching means or a corresponding input and which is arranged to display one or more user interface elements, and status means for detecting the active mode of the touching means giving the input to the touch screen. The device is arranged to adapt one or more user interface elements displayed on the touch screen to be suitable for the touching means whose active mode is detected by the mode status means.

WO-2004/006080-A2 discloses a data processing device enabling a user to input characters, the device comprising a touch-sensitive member arranged to function as a virtual keyboard, said member including at least one touch sensor for detecting touched zones on said member. The device further comprises key allocation means for allocating at least two reference keys of the virtual keyboard in response to said detection of the touched zones. The device comprises at least one pressure sensor for sensing a finger causing a force on the touch-sensitive member higher than other fingers when more than one finger touches said member. A recognition of a key stroke may be realized. The reference keys may be reallocated upon a user's request or detection of a predetermined condition. The invention also relates to a method of enabling a user to input characters.

### BRIEF SUMMARY OF THE INVENTION

An aim of certain embodiments of the present invention is to address at least some of the above-mentioned problems and/or disadvantages and to provide at least some of the advantages described below. Accordingly, an aim of certain embodiments of the present invention is to provide a mobile device with a touch screen and a related method for setting a virtual keypad of the mobile device.

In accordance with a first aspect of the present invention there is provided method for setting a virtual keypad on a touch screen of a mobile device, the method comprising: displaying, in a keypad setting mode, different sized scan windows having the same central point; determining the smallest scan window which covers a touch detected region when a touch is detected within the scan windows; displaying a virtual keypad composed of keys having a size which corresponds to the determined smallest scan window; and storing the displayed virtual keypad.

In accordance with a second aspect of the present invention there is provided mobile device comprising: a memory unit arranged to store virtual keypads with different sized keys; a touch screen arranged to detect a touch thereon and to display at least one of the virtual keypads; and a control unit arranged, in a keypad setting mode, to control the touch screen to display different sized scan windows having the same central point, to determine the smallest scan window which covers a touch detected region when a touch is detected by the touch screen within the scan windows, to display a virtual keypad composed of keys having a size which corresponds to the determined scan window, and to store the displayed virtual keypad.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a block diagram illustrating a configuration of a mobile device including a touch screen according to an exemplary embodiment of the present invention.
FIG. 2 is a flow diagram illustrating a method for setting a virtual keypad on a touch screen of a mobile device according to an exemplary embodiment of the present invention.
FIGs. 3A and 3B are exemplary views illustrating display screens with a size scan window for determining a touch size, of which FIG. 3B is according to an exemplary embodiment of the present invention.
FIGs. 4A to 4E are exemplary views illustrating a series of display screens for setting a virtual keypad according to an exemplary embodiment of the present invention.
FIG. 5 is a flow diagram illustrating a method for setting a virtual keypad on a touch screen of a mobile device.
FIG. 6 is an exemplary view illustrating a display screen for setting a virtual keypad.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skilled in the art will recognize that various changes and modifications of the embodiments described herein can be made without departing from the scope of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention provide a virtual keypad which refers to an arrangement of a plurality of virtual keys displayed on a touch screen and used for entry of letters and numbers in a mobile device. The virtual keypad may include other graphical objects, such as icons or a list arranged, for selection of menu items. That is, a virtual keypad may include a variety of keys, icons, a list, and the like used for selecting functions or menus available for a mobile device.

A touch size refers to an area of a region where a user's touch is electrically detected. The touch size may include at least one length in lengthwise, widthwise and/or diagonal directions. A touch region may be represented as coordinates from which a touch size is calculated.

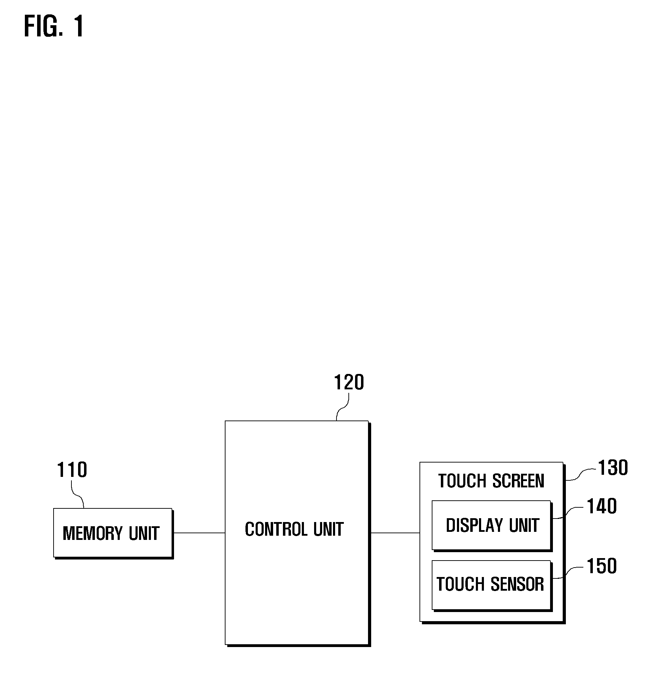

FIG. 1 is a block diagram illustrating a configuration of a mobile device including a touch screen according to an exemplary embodiment of the present invention.

Referring to FIG. 1, a mobile device includes a memory unit 110, a control unit 120 and a touch screen 130.

The memory unit 110 stores a variety of programs required for performing functions of the mobile device and data created while the functions are performed. More particularly, the memory unit 110 may store a size scan window displayed on the touch screen 130. In a keypad setting mode, the size scan window is used as a standard for determining the touch size of a region where a user's touch is detected. Furthermore, the memory unit 100 may store different sized virtual keypads, each of which corresponds to the touch size of each touch-detected region.

For example, a virtual keypad composed of one-sized keys corresponds to a touch region having a size of one or less, and another virtual keypad composed of twenty-five-sized keys corresponds to a touch region having a size of ten or more. Additionally, a further virtual keypad composed of nine-sized keys corresponds to a touch region having a size between one and ten.

In an alternative example, a virtual keypad may correspond to coordinates of a touch region rather than to the touch size. More specifically, a virtual keypad having one-sized keys is assigned to a touch region located within coordinates (-1, 0), (1, 0), (0, 1) and (0, -1), and another virtual keypad having nine-sized keys is assigned to a touch region located within coordinates (-3, 0), (3, 0), (0, 3) and (0, -3). Additionally, a further virtual keypad having twenty-five-sized keys is assigned to a touch region located within coordinates (-5, 0), (5, 0), (0, 5) and (0, -5). The above sizes and coordinates of keys and touch regions are provided as an example and may be differently determined by a user or a manufacturer.

The control unit 120 controls states and operations of whole elements of the mobile device. More particularly, the control unit 120 controls the touch screen 130 to display a size scan window when a keypad setting mode is selected by a user. More specifically, once a user's touch is detected on a size scan window being presently displayed, the control unit 120 receives the coordinates of a touch-detected region from the touch screen 130. The control unit 120 then determines the size of a touch region from the received coordinates and retrieves a virtual keypad corresponding to the calculated size from the memory unit 110. The control unit 120 then controls the touch screen 130 to display the retrieved virtual keypad thereon.

In order to obtain the size of a touch region, the control unit 120 may use several well-known techniques. For example, the control unit 120 may determine a widthwise dimension between a leftmost coordinate and a rightmost coordinate of a touch region, or a lengthwise dimension between an uppermost coordinate and a lowermost coordinate of a touch region. Alternatively, the control unit 120 may determine a rough or an exact area of a touch region from at least three arbitrary coordinates on boundaries of a touch region. After the size of a touch region is determined, the control unit 120 selects a virtual keypad adapted to be displayed on the touch screen 130. For example, if the determined size of a touch region is twelve, the control unit 120 selects a virtual keypad which has twenty-five-sized keys and is assigned to a touch region having the size of ten or more.

The touch screen 130 includes a display unit 140 and a touch sensor 150. The display unit 140 provides various kinds of graphical information related to states and operations of the mobile device. More particularly, in a keypad setting mode under the control of the control unit 120, the display unit 140 may display a size scan window used for determining the touch size of a user's touch region. Also, the display unit 140 may display a virtual keypad selected depending on the determined touch size.

The touch sensor 150 is embedded in the display unit 140 to detect a user's touch action on a surface of the display unit 140. Also, the touch sensor 150 acquires the coordinates of a detected touch region and then transmits values of the coordinates to the control unit 120. To acquire the coordinates of a touch region, the touch screen 130 provides a surface with an imaginary grid framework having intersecting points to which coordinates are assigned. Therefore, when a user touches a surface of the touch screen 130, the touch sensor 150 detects touched intersecting points corresponding to a touch region, and then acquires the coordinates of the touched intersecting points.

Although not illustrated in the drawings, the mobile device may further include other well-known elements, such as a Radio Frequency (RF) communication unit, a camera module, a broadcast receiving module, a wireless internet module, and the like.

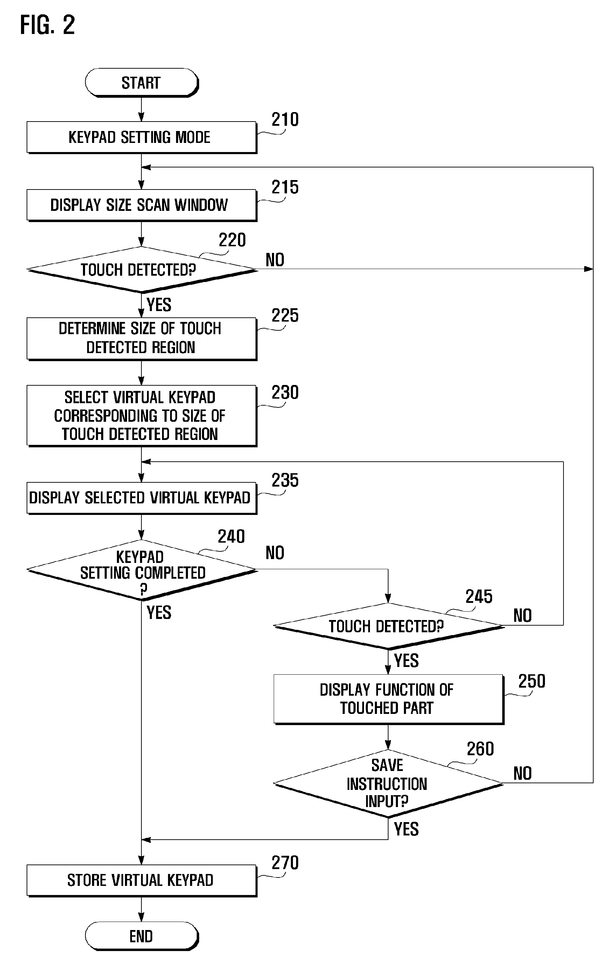

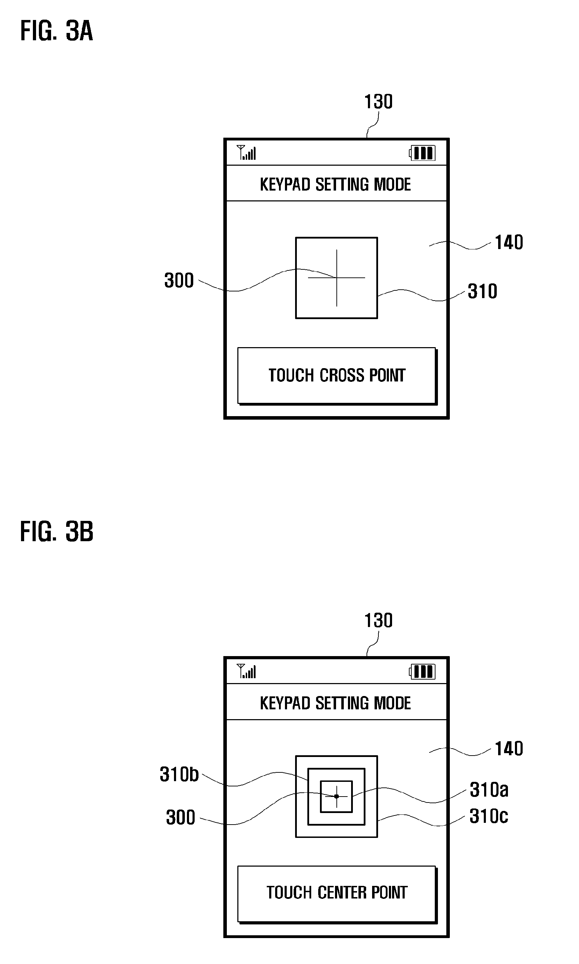

FIG. 2 is a flow diagram illustrating a method for setting a virtual keypad on a touch screen of a mobile device according to an exemplary embodiment of the present invention. Additionally, FIGs. 3A and 3B are exemplary views illustrating display screens with a size scan window for determining a touch size, of which FIG. 3B is according to an exemplary embodiment of the present invention.

Referring to FIG. 2, when a user selects a keypad setting mode through a suitable menu or function key to set a virtual keypad displayed on the touch screen 130, the control unit 120 enters into a keypad setting mode in step 210. Also, in case of being predefined by a user or a manufacturer, the control unit 120 may automatically activate a keypad setting mode upon booting of the mobile device.

Then, under the control of the control unit 120, the touch screen 130 displays a size scan window 310 to be used for determining the size of a touch region in step 215. The size scan window 310 may be displayed as illustrated in FIGs. 3A (example outside of the scope of the appended claims) and 3B (embodiment of the claimed invention) . More specifically, in a keypad setting mode, the touch screen 130 may display the size scan window of a single rectangle 310 enclosing a crisscross pattern 300 as illustrated in FIG. 3A. Additionally, a pop-up message, such as 'Touch Cross Point', may be displayed. That is, when a user wishes to use a keypad setting mode, the size scan window 310, together with an appended pop-up message, inform a user where to touch a surface through a finger or a stylus pen.

As illustrated in FIG. 3B, the size scan window is composed of different sized rectangles 310a, 310b and 310c enclosing a crisscross pattern 300. The different sized rectangles 310a, 310b and 310c have the same central point. A pop-up message, such as 'Touch Center Point', may also be displayed.

Next, the control unit 120 determines whether a touch signal is received from the size scan window 310 in step 220. If the touch signal is received, the control unit 120 determines the size of a touch region in step 225. The determination of the touch size may require a single touch action or several touch actions. In the latter case, the control unit 120 may determine respective sizes of touch regions and then determine the average of the respective sizes to determine the touch size. More specifically, the control unit 120 may use several techniques to determine the touch size.

If the size scan window 310 of a single rectangle is used as illustrated in FIG. 3A, the control unit 120 determines whether a touch signal is received from the inside of the size scan window 310. If the touch signal is received, the control unit 120 acquires the coordinates on the boundaries of a touch region. Then, by using the acquired coordinates, the control unit 120 determines the touch size, such as length or area, of the touch region.

If a touch signal is received from outside of the size scan window 310, the control unit 120 transmits a touch failure message to the display unit. The touch failure message is displayed in a pop-up message or in an overlay message form to inform a user that the touch is not exactly within the size scan window 310.

On the other hand, if the size scan windows 310a, 310b and 310c of the different sized rectangles are used as illustrated in FIG. 3B, the control unit 120 first determines whether a touch signal is received from the size scan windows 310a, 310b and 310c through the touch screen 130.

If the touch signal is received, the control unit 120 further determines which size scan window completely covers a touch detected region. The control unit 120 then determines the touch size of the touch detected region.

More specifically, if a touch signal is received through the touch screen 130, the control unit 120 acquires the coordinates of the touch detected region. Then the control unit 120 compares the acquired coordinates with the coordinates of the respective windows 310a, 310b and 310c.

Based on the above comparison, the control unit 120 may be able to determine which of the size scan windows 310a, 310b and 310c completely covers the touch detected region. The control unit 120 then determines the size of the touch region by using the size scan window that completely covers the touch region.

For example, in FIG. 3B, the first size scan window 310a may have the size of one and four corner coordinates (-1, 0), (1, 0), (0, 1) and (0, -1). Similarly, the second size scan window 310b may have the size of nine and four corner coordinates (-3, 0), (3, 0), (0, 3) and (0, -3), and the third size scan window 310c may have the size of twenty five and four corner coordinates (-5, 0), (5, 0), (0, 5) and (0, -5).

If the control unit 120 acquires coordinates (-4, 0), (4, 0), (0, 4) and (0, - 4) from the touch region, the touch region may be located between the second size scan window 310b and the third size scan window 310c. Therefore, the control unit 120 may consider, as the size of the touch region, the size of the third size scan window 310c completely covering the touch region.

If the touch region has coordinates between the first size scan window 310a and the second size scan window 310b, the second size scan window 310b and the third size scan window 310c are determined to completely cover the touch region. In this case, the control unit 120 determines the size of the touch region from the smallest touch region of the second size scan window 310b and the third size scan window 310c.

On the other hand, when a user fails to touch a central point of the size scan windows 310a, 310b and 310c (i.e., touch the outside of the size scan windows), the control unit 120 controls the display unit to display a touch failure message in a pop-up message or an overlay form message. Alternatively, in a touch failure case, the control unit 120 may move the location of the size scan windows 310a, 310b and 310c toward a user's touch region. That is, the control unit 120 receives the central point of a user's touch region and then redisplays the size scan windows based on the received central point.

Returning to FIG. 2, after determining the touch size of a touch region, the control unit 120 accesses the memory unit 110 storing virtual keypads and then retrieves a virtual keypad corresponding to the determined touch size in step 230. The control unit 120 controls the touch screen 130 to display the retrieved virtual keypad in step 235. For example, if the touch region has the size of one, the control unit 120 retrieves the virtual keypad composed of one-sized keys from the memory unit 110 and then displays the virtual keypad on the touch screen 130.

The control unit 120 determines whether a keypad setting is completed in step 240. More specifically, if a user selects a predefined soft key, such as the OK key or the save key, displayed on the touch screen 130, the control unit 120 determines that a keypad setting is completed and stores the displayed virtual keypad as a current keypad in the memory unit 110 in step 270. The stored current keypad will be displayed on the touch screen 130 when specified functions, such as writing a message, inputting a call number, and selecting a menu, which need a user's input are executed.

If a keypad setting is not yet completed, the control unit 120 determines whether a touch signal is received from the virtual keypad displayed on the touch screen 130 in step 245. If the touch signal is received, the control unit 120 controls the touch screen 130 to display a function corresponding to a touched part in step 250. For example, when a specific number or letter key in the virtual keypad is touched, the control unit 120 displays a number or letter corresponding to a touch key on the touch screen 130. When a specific icon or list item in the virtual keypad is touched, the control unit 120 displays a menu corresponding to a touched icon or list item on the touch screen 130. Here, icons may be represented by images or menu titles, and items of a list may be represented by menu titles.

The control unit 120 determines whether a save instruction is input in step 260. More specifically, if a user selects a save key through the touch screen 130, the control unit 120 stores the displayed virtual keypad as a current keypad in the memory unit 110. The stored current keypad will be displayed on the touch screen 130 when specified functions, such as writing a message, inputting a call number, and selecting a menu, which need a user's input are executed.

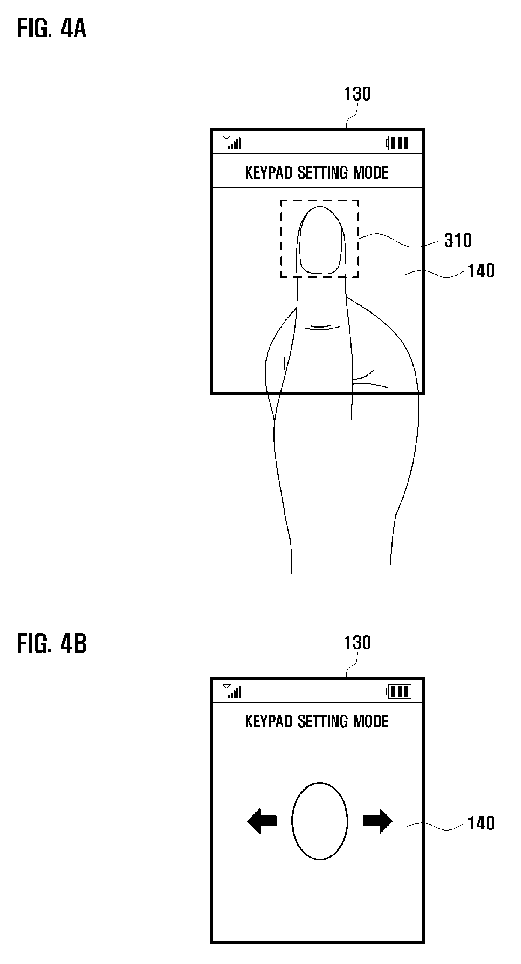

FIGs. 4A to 4E are exemplary views illustrating a series of display screens for setting a keypad according to an exemplary embodiment of the present invention.

Referring to FIGs. 3A (example), 3B (embodiment), and 4A to 4E, in a keypad setting mode, the control unit 120 controls the touch screen 130 to display at least one size scan window 310 as illustrated in FIGs. 3A and 3B. As illustrated in FIG. 4A, a user may touch the size scan window 310 on the touch screen 130 by using a finger or its equivalent. The control unit 120 therefore receives a touch signal from a touch region and, as illustrated in FIG. 4B, displays the touch region on the touch screen 130. Next, the control unit 120 determines the touch size of the touch region as described above.

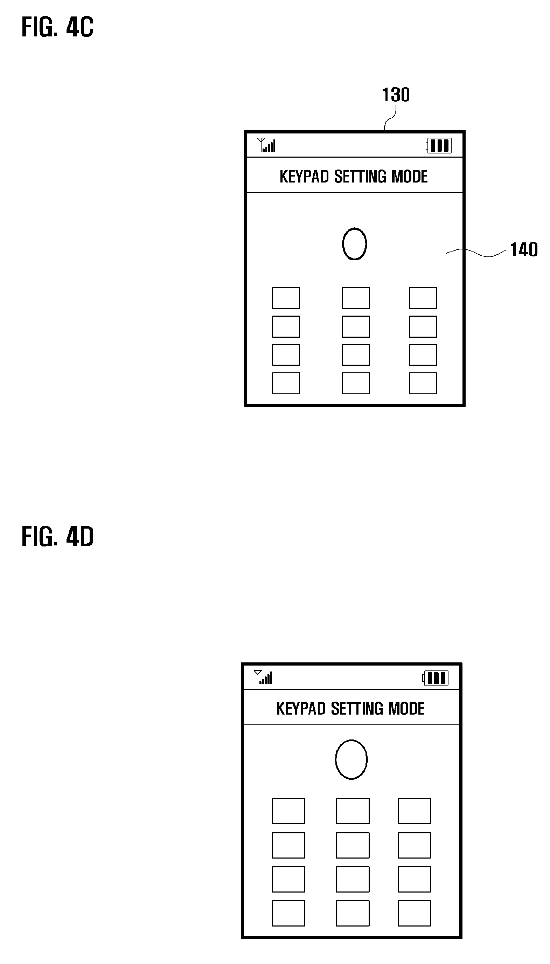

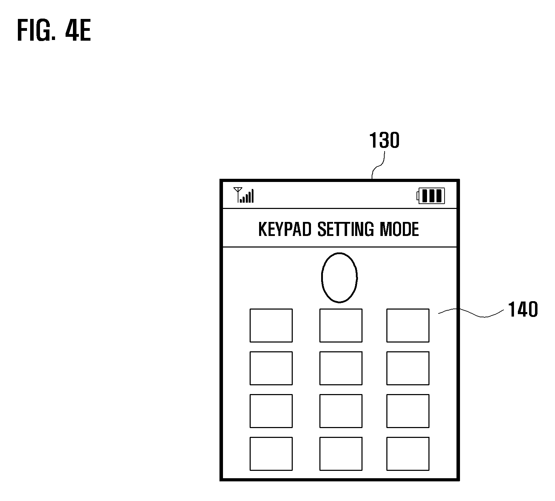

As illustrated in FIGs. 4C to 4E, after determining the touch size, the control unit 120 controls the touch screen 130 to display a virtual keypad corresponding to the touch region. For example, if the touch region has the size of one or less, a virtual keypad composed of one-sized keys is displayed as illustrated in FIG. 4C. If the touch region has a size between one and ten, a virtual keypad composed of nine-sized keys is displayed as illustrated in FIG. 4D. If the touch region has the size of ten or more, a virtual keypad composed of twenty-five-sized keys is displayed as illustrated in FIG. 4E.

As described above, a virtual keypad displayed on the touch screen 130 may be determined based on the size of a touch detected region. That is, a user may select a proper one of different sized virtual keypads after considering a finger size or the tip size of a touching tool. Although the keypad size selection as described above is exemplary only, the present invention is not limited thereto. In an exemplary implementation, the shape, color, configuration, and the like of the virtual keypad may also be differently determined according to the size of a touch detected region.

For example, if a touch detected region has a size greater than a predefined size, a virtual keypad may be determined to have circular shaped keys. Also, if a touch detected region has a size smaller than a predefined size, a virtual keypad may be determined to have triangular shaped keys. In an exemplary implementation, if a touch detected region has a size greater than a predefined size, a virtual keypad may be determined to have yellow colored keys. Also, if a touch detected region has a size smaller than a predefined size, a virtual keypad may be determined to have blue colored keys. In a further exemplary implementation, if a touch detected region has a size greater than a predefined size, keys of a virtual keypad may be configured lengthwise along the left or right side of the touch screen.

In the exemplary embodiments of the present invention, the size scan window 310 is used for a mobile device to determine a virtual keypad displayed on the touch screen 130. Although the size scan window 310 is illustrated to have a rectangular shape, the illustrated shape is exemplary only, and the present invention is not limited thereto. In an exemplary implementation, the size scan window may have any other suitable shapes.

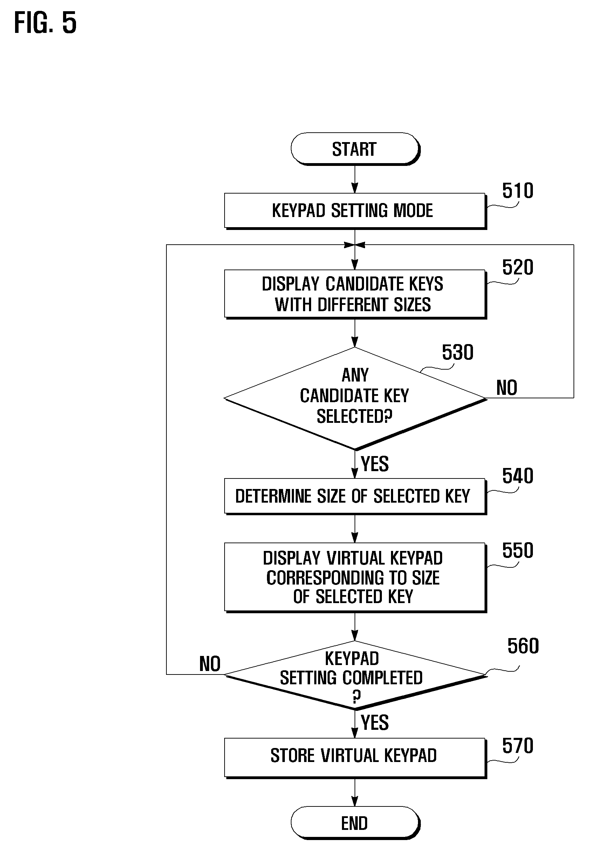

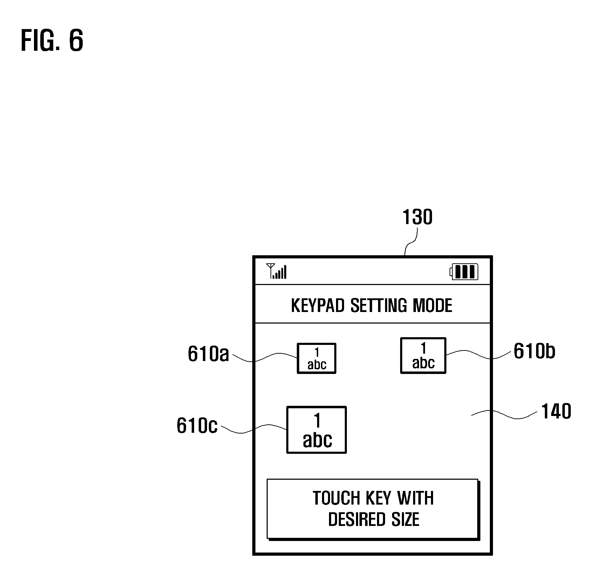

FIG. 5 is a flow diagram illustrating a method for setting a keypad on a touch screen of a mobile device other than in accordance with the present invention. FIG. 6 is an exemplary view illustrating a screen for setting a keypad other than in accordance with the present invention.

Referring to FIG. 5, when a user selects a keypad setting mode through a suitable menu or function key, the control unit 120 enters into a keypad setting mode in step 510. Also, in case of being predefined by a user or a manufacturer, the control unit 120 may automatically activate a keypad setting mode upon booting of the mobile device.

Under the control of the control unit 120, the touch screen 130 displays several candidate keys for a virtual keypad on the touch screen 130 in step 520. As illustrated in FIG. 6, the candidate keys have different sizes. Additionally, a pop-up message, such as 'Touch Key with Desired Size', may be displayed to help a user to select a desired key size. Each of the candidate keys corresponds to one of virtual keypads stored in the memory unit. For example, if the memory unit stores the first virtual keypad having one-sized keys the second virtual keypad having nine-sized keys, and the third virtual keypad having twenty-five sized keys, the control unit 120 displays in a keypad setting mode a one-sized key 610a of the first virtual keypad, a nine-sized key 610b of the second virtual keypad and a twenty-five-sized key 610c of the third virtual keypad on the touch screen 130.

The control unit 120 determines whether a touch signal is received from one of the candidate keys in step 530. That is, the control unit 120 determines whether one of the candidate keys displayed on the touch screen 130 is selected. If any candidate key is selected, the control unit determines the size of the selected key in step 540 and then displays a corresponding keypad on the touch screen in step 550. For example, if a user selects a nine-sized key 610b, the control unit 120 displays the second virtual keypad composed of nine-sized keys on the touch screen 130.

Additionally, the control unit 120 determines whether a keypad setting is completed in step 560. More specifically, if a user selects a predefined soft key, such as the OK key or the save key, displayed on the touch screen 130, the control unit 120 determines that a keypad setting is completed, and then stores the displayed virtual keypad as a current keypad in the memory unit 110 in step 570. The stored current keypad will be displayed on the touch screen 130 when specified functions, such as writing a message, inputting a call number, and selecting a menu, which need a user's input are executed.

If a keypad setting is not yet completed, the control unit 120 returns to the previous step 520 and redisplays the candidate keys on the touch screen 130. Accordingly, a user may select another candidate key in step 530.

As fully described above, a virtual keypad displayed on the touch screen may be determined based on the size of a touch detected region. Therefore, a user may select a suitable sized virtual keypad in consideration of a finger size or the tip size of a touching tool. Also, when selecting a menu or inputting letters, a user may have a reduced possibility of touching by mistake.

While this invention has been shown and described with reference to certain exemplary embodiments thereof, it will be understood by those skilled in the art that various changes in form and details may be made therein without departing from the scope of the invention as defined by the appended claims.

## Claims

1. A method for setting a virtual keypad on a touch screen (130) of a mobile device, the method comprising:
displaying (215), in a keypad setting mode (210), different sized scan windows (310) having the same central point (300);
determining (225) the smallest scan window (310) which covers a touch detected region when a touch is detected within the scan windows (310);
displaying (235) a virtual keypad composed of keys having a size which corresponds to the determined smallest scan window (310); and
storing (270) the displayed virtual keypad.

2. The method of claim 1, wherein the scan windows (310) comprise different sized rectangles enclosing a crisscross pattern (300).

3. The method of any preceding claim, further comprising:
determining (225) the size of the touch detected region based on the size of the determined smallest scan window (310).

4. The method of claim 2, further comprising:
receiving a central point of the touch detected region; and
redisplaying the different sized scan windows (310) with the crisscross pattern located on the central point.

5. The method of any preceding claim, wherein the virtual keypad comprises virtual keys used for entry of letters and numbers, or graphical objects arranged for selecting menu items.

6. A mobile device comprising:
a memory unit (110) arranged to store virtual keypads with different sized keys;
a touch screen (130) arranged to detect (220) a touch thereon and to display at least one of the virtual keypads; and
a control unit (120) arranged, in a keypad setting mode (210), to control the touch screen (130) to display (215) different sized scan windows (310) having the same central point, to determine (225) the smallest scan window (310) which covers a touch detected region when a touch is detected by the touch screen (130) within the scan windows (310), to display a virtual keypad composed of keys having a size which corresponds to the determined scan window (310), and to store (270) the displayed virtual keypad.

7. The mobile device of claim 6, wherein the scan windows (310) comprise different sized rectangles enclosing a crisscross pattern (300).

8. The mobile device of claim 6 or claim 7, wherein the control unit (120) is further arranged to determine (225) the size of the touch region based on the size of the determined smallest scan window (310).

9. The mobile device of claim 7, wherein the control unit (120) is further arranged to receive a central point of the touch detected region, and to redisplay the different sized scan windows (310) with the crisscross pattern (300) located on the central point.

10. The mobile device of any of claims 6 to 9, wherein the virtual keypad comprises virtual keys used for entry of letters and numbers, or graphical objects arranged for selecting menu items.

## Patentansprüche

1. Verfahren zum Einstellen eines virtuellen Tastenfelds auf einem Berührungsbildschirm (130) eines Mobilgeräts, wobei das Verfahren Folgendes umfasst:
Anzeigen (215) verschieden großer Abtastfenster (310) mit dem gleichen Mittelpunkt (300) in einem Tastenfeldeinstellmodus (210),
Bestimmen (225) des kleinsten Abtastfensters (310), das einen Berührungserfassungsbereich bedeckt, wenn eine Berührung in den Abtastfenstern (310) erfasst wird,
Anzeigen (235) eines virtuellen Tastenfelds, das aus Tasten besteht, die ein Größe aufweisen, welche dem kleinsten bestimmten Abtastfenster (310) entspricht, und
Speichern (270) des angezeigten virtuellen Tastenfelds.

2. Verfahren nach Anspruch 1, bei dem die Abtastfenster (310) verschieden große Rechtecke umfassen, die ein kreuzförmiges Muster (300) umgeben.

3. Verfahren nach einem der vorhergehenden Ansprüche, das ferner Folgendes umfasst:
Bestimmen (225) der Größe des Berührungserfassungsbereichs auf der Grundlage der Größe des kleinsten bestimmten Abtastfensters (310).

4. Verfahren nach Anspruch 2, das ferner Folgendes umfasst:
Empfangen eines Mittelpunkts des Berührungserfassungsbereichs und
erneutes Anzeigen der verschieden großen Abtastfenster (310) mit dem kreuzförmigen Muster auf dem Mittelpunkt.

5. Verfahren nach einem der vorhergehenden Ansprüche, bei dem das virtuelle Tastenfeld virtuelle Tasten, die zum Eingeben von Buchstaben und Zahlen verwendet werden, oder grafische Objekte umfasst, die zum Auswählen von Menüpunkten angeordnet sind.

6. Mobilgerät, das Folgendes umfasst:
eine Speichereinheit (110), die zum Speichern virtueller Tastenfelder mit verschieden großen Tasten vorgesehen ist,
einen Berührungsbildschirm (130), der zum Erfassen (220) einer Berührung darauf und zum Anzeigen mindestens eines der virtuellen Tastenfelder vorgesehen ist, und
eine Steuereinheit (120), die in einem Tastenfeldeinstellmodus (210) dafür vorgesehen ist, den Berührungsbildschirm (130) so zu steuern, dass verschieden große Abtastfenster (310) mit dem gleichen Mittelpunkt angezeigt (215) werden, das kleinste Abtastfenster (310) zu bestimmen (225), das einen Berührungserfassungsbereich bedeckt, wenn von dem Berührungsbildschirm (130) in den Abtastfenstern (310) eine Berührung erfasst wird, ein virtuelles Tastenfeld anzuzeigen, das aus Tasten besteht, die ein Größe aufweisen, welche dem bestimmten Abtastfenster (310) entspricht, und das angezeigte virtuelle Tastenfeld zu speichern.

7. Mobilsgerät nach Anspruch 6, bei dem die Abtastfenster (310) verschieden große Rechtecke umfassen, die ein kreuzförmiges Muster (300) umgeben.

8. Mobilgerät nach Anspruch 6 oder 7, bei dem die Steuereinheit (120) ferner dafür vorgesehen ist, die Größe des Berührungserfassungsbereichs auf der Grundlage der Größe des kleinsten bestimmten Abtastfensters (310) zu bestimmen (225).

9. Mobilsgerät nach Anspruch 7, bei dem die Steuereinheit (120) ferner dafür vorgesehen ist, einen Mittelpunkt des Berührungserfassungsbereichs zu empfangen und die verschieden großen Abtastfenster (310) mit dem kreuzförmigen Muster (300) auf dem Mittelpunkt erneut anzuzeigen.

10. Mobilgerät nach einem der vorhergehenden Ansprüche 6 bis 9, bei dem das virtuelle Tastenfeld virtuelle Tasten, die zum Eingeben von Buchstaben und Zahlen verwendet werden, oder grafische Objekte umfasst, die zum Auswählen von Menüpunkten angeordnet sind.

## Revendications

1. Un procédé de configuration d'un clavier virtuel sur un écran tactile (130) d'un dispositif mobile, le procédé comprenant :
l'affichage (215), dans un mode de configuration de clavier (210), de fenêtres de balayage de tailles différentes (310) possédant le même point central (300),
la détermination (225) de la fenêtre de balayage la plus petite (310) qui couvre une zone de détection tactile lorsqu'un contact est détecté à l'intérieur des fenêtres de balayage (310),
l'affichage (235) d'un clavier virtuel composé de touches possédant une taille qui correspond à la fenêtre de balayage la plus petite déterminée (310), et
la conservation en mémoire (270) du clavier virtuel affiché.

2. Le procédé selon la Revendication 1, où les fenêtres de balayage (310) comprennent des rectangles de différentes tailles contenant un motif entrecroisé (300).

3. Le procédé selon l'une quelconque des Revendications précédentes, comprenant en outre :
la détermination (225) de la taille de la zone de détection tactile en fonction de la taille de la fenêtre de balayage la plus petite déterminée (310).

4. Le procédé selon la Revendication 2, comprenant en outre :
la réception d'un point central de la zone de détection tactile, et
le réaffichage des fenêtres de balayage de tailles différentes (310) avec le motif entrecroisé situé sur le point central.

5. Le procédé selon l'une quelconque des Revendications précédentes, où le clavier virtuel comprend des touches virtuelles utilisées pour la saisie de lettres et de chiffres, ou des objets graphiques agencés pour la sélection d'éléments de menu.

6. Un dispositif mobile comprenant :
une unité à mémoire (110) agencée de façon à conserver en mémoire des claviers virtuels avec des touches de différentes tailles,
un écran tactile (130) agencé de façon à détecter (220) un contact sur celui-ci et à afficher au moins un des claviers virtuels, et
une unité de commande (120) agencée, dans un mode de configuration de clavier (210), de façon à commander l'écran tactile (130) de façon à afficher (215) des fenêtres de balayage de tailles différentes (310) possédant le même point central, de façon à déterminer (225) la fenêtre de balayage la plus petite (310) qui couvre une zone de détection tactile lorsqu'un contact est détecté par l'écran tactile (130) à l'intérieur des fenêtres de balayage (310), de façon à afficher un clavier virtuel composé de touches possédant une taille qui correspond à la fenêtre de balayage déterminée (310), et de façon à conserver en mémoire (270) le clavier virtuel affiché.

7. Le dispositif mobile selon la Revendication 6, où les fenêtres de balayage (310) comprennent des rectangles de différentes tailles contenant un motif entrecroisé (300).

8. Le dispositif mobile selon la Revendication 6 ou 7, où l'unité de commande (120) est agencée en outre de façon à déterminer (225) la taille de la zone tactile en fonction de la taille de la fenêtre de balayage la plus petite déterminée (310).

9. Le dispositif mobile selon la Revendication 7, où l'unité de commande (120) est agencée en outre de façon à recevoir un point central de la zone de détection tactile, et de façon à réafficher les fenêtres de balayage de tailles différentes (310) avec le motif entrecroisé (300) situé sur le point central.

10. Le dispositif mobile selon l'une quelconque des Revendications 6 à 9, où le clavier virtuel comprend des touches virtuelles utilisées pour la saisie de lettres et de chiffres, ou des objets graphiques agencés pour la sélection d'éléments de menu.
